# EUROPÄISCHE PATENTSCHRIFT

(11) **EP 0 219 083 B1**
(45) Veröffentlichungstag und Bekanntmachung des Hinweises auf die Patenterteilung: **07.01.1993**
(21) Anmeldenummer: 86114106.7
(22) Anmeldetag: 11.10.1986
(51) Int. Cl.: B01D 61/50, C02F 1/46

(54) **Elektrodialyse-Membranstapeleinheit für Mehrkammerprozesse**
Electrodialysis membrane stack assembly for multichamber processes
Unité d'électrodialyse à membranes empilées pour des procédés à chambres multiples

(30) Priorität: 16.10.1985 DE 3536778
(43) Veröffentlichungstag der Anmeldung: 22.04.1987
(73) Patentinhaber: Stantech GmbH, D-20535 Hamburg (DE)
(72) Erfinder: Strathmann, Heiner, Dr., D-7400 Tübingen (DE); Schmoldt, Harm, D-2000 Hamburg 65 (DE)
(74) Vertreter: von Kreisler, Alek, Dipl.-Chem.

(56) Entgegenhaltungen:
- EP-A- 0 095 583
- DE-A- 2 946 284
- US-A- 3 085 970
- US-A- 4 172 779

## Beschreibung

Die Erfindung betrifft eine Membranstapeleinheit für Elektrodialyse-Mehrkammerprozesse.

Der Transport von Ionen durch geeignete Membranen unter der Einwirkung eines elektrischen Feldes ist als "Elektrodialyse" bekannt. Gleichfalls kennt man seit langem Apparaturen zur Elektrodialyse, in denen Ionenaustauschermembranen so angeordnet werden, daß alternierend wohldefinierte Anionen-Kationenaustauschermembransequenzen zwischen zwei Elektroden eingeordnet werden und den Innenraum der Apparatur in schmale Kammern teilen. Unter dem Einfluß eines elektrischen Feldes werden bei Durchströmung dieser Kammern durch entsprechende ionogene Lösungen salzärmere und salzreichere Volumenströme erhalten, da die Kationen nur die Kationenaustauschermembranen und die Anionen nur die Anionenaustauschermembranen passieren können. Die Anreicherung der entsprechenden Ionen erfolgt dabei gegen den Konzentrationsgradienten.

In der praktischen Anwendung der Elektrodialyse werden die einzelnen entsprechenden Zellen kontinuierlich mit einer verdünnten und einer konzentrierten Lösung durchspült. Für die Wirtschaftlichkeit des Verfahrens ist es von besonderer Bedeutung, daß die Strömungsgeschwindigkeit und die Strömungsverteilung in allen Zellen möglichst gleichmäßig ist, so daß keine Konzentrationspolarisation an den Membranoberflächen auftreten kann. Weiterhin muß ein Übertritt der konzentrierten Lösung in die verdünnte Lösung, hervorgerufen durch Undichtigkeiten der durch die Ionenaustauscher-Membranen getrennten Kammern, sowie Leckagen nach außen vermieden werden. Die Konstruktion der Elektrodialysekammern stellt somit ein erhebliches Problem beim Bau einer technischen Elektrodialyseanlage dar, besonders vor dem Hintergrund der Tatsache, daß möglichst geringe Kammerdicken die Wirtschaftlichkeit des Verfahrens stark begünstigen.

Bei den meisten heute eingesetzten Elektrodialyseanlagen werden die Membranen durch jeweils einen Kunststoffrahmen voneinander getrennt. Die übereinander bzw. nebeneinander angeordneten Kunststoffrahmen sind mit Löchern für die Zufuhr bzw. Abfuhr der entsalzten und der konzentrierten Lösung in die bzw. aus den entsprechenden Zellen versehen. Die Membranen werden auf den Rahmen mechanisch abgedichtet. Da die einzelnen Kammern für konzentrierte und entsalzte Lösungen in entsprechender Sequenz alternierend in einem Zellpaket angeordnet sind, muß die Zufuhr bzw. Abfuhr des Konzentrats bzw. der entsalzten Lösung ebenfalls alternierend in die bzw. aus den Zellen erfolgen.

Bisher erfolgt im allgemeinen die Anströmung einer Zelle diagonal von einer Ecke der Zelle aus, und die Ableitung der Lösung erfolgt an der gegenüberliegenden Seite der Zelle, so daß der Strom des Konzentrats und der entsalzten Lösung auf beiden Seiten der Membran genau entgegengesetzt diagonal geführt wird. Dies führt zum einen dazu, daß die Strömungsverteilung in den Kammern nicht optimal ist und sich Zonen geringer Durchmischung und damit erhöhter Konzentrationspolarisation ausbilden. Infolge der unterschiedlichen Anströmung der einzelnen Kammern treten zum anderen außerdem Differenzen in den Druckgradienten zwischen den Kammern mit der konzentrierten und mit der entsalzten Lösung auf, wodurch lokal begrenzte, aber zum Teil hohe Druckdifferenzen zwischen den einzelnen Zellen entstehen. Dies führt zu einer zusätzlichen mechanischen Belastung jeder einzelnen Membran, und unter Umständen zu einer Veränderung der Zellgeometrie, die wiederum ungünstigen Einfluß auf die Strömungsverteilung nimmt.

Bei Verwendung rauher Membranmaterialien treten zudem Probleme der mechanischen Abdichtung der einzelnen Kammern gegeneinander auf, so daß zwischen den einzelnen Zellrahmen Lösung aus dem Zellpaket austritt oder auch ein Austausch zwischen der konzentrierten und der bereits entsalzten Lösung stattfindet. Die Wirtschaftlichkeit der Entsalzung ionogener Lösungen mit Hilfe der Elektrodialyse wird dadurch wesentlich beeinflußt.

Die Konstruktion eines Membranstapels mit gleichmäßiger Durchströmung für das Entsalzen einer Kochsalzlösung mit zwei Lösungsströmen sowie die Grundkonzeption der zur Durchführung einer derartigen Entsalzung geeigneten Zellrahmen sind aus der DE-OS 29 46 284 bekannt. Mit der vorgeschlagenen Konstruktion des Membranstapels können, jedoch keine sogenannten Mehrkammerprozesse durchgeführt werden, die zum Ziel haben, aus Lösungen und Abwässern unter wirtschaftlichen Bedingungen mehrere unterschiedliche gelöste Komponenten abzutrennen oder zu behandeln. Dies spielt z.B. dann eine Rolle, wenn gelöste Wertstoffe wiedergewonnen bzw. durch Rückführung von neuem in den Trennprozeß eingeschleust werden sollen. Die in der DE-OS 29 46 284 vorgeschlagenen Membranstapel sehen eine Zu- und Abführung von mehr als zwei Lösungsströmen nicht vor und ermöglichen sie auch nicht durch einfache technische Zusatzmaßnahmen.

Im Zusammenhang mit sogenannten "Mehrkammerprozessen" sind Membranstapel für den Laborbetrieb bekannt, bei denen die Kammern einzeln angeströmt werden. Diese Kammern sind jedoch mehr als 5 mm dick, was bei einer Erhöhung der Kammerzahl und/oder einer Vergrößerung der Membranfläche zu Membranstapeln von unpraktikabler Größe führt. Außerdem wurden bei Einzelanströmung der Kammern immer wieder Schwierigkeiten bei der Anbringung von gemeinsamen Zu- und Ableitungen bekannt. Die Wirtschaftlichkeit dieses Membrantrennverfahrens hängt wesentlich von der Kammerdicke ab: mit derartig dicken Kammern ist großtechnisch dieses Verfahren recht unwirtschaftlich.

Die DE-OS 32 19 869 bzw die auf ihr basierenden EP-A2-0095 583 und EP-B1 00 95 583 offenbaren Membranstapeleinheiten, bei denen die vier Seiten eines quadratischen Zellrahmens unter Anwendung der bekannten Zweikreis-Stapeltechnik alternierend dazu benutzt werden, um vier getrennte Zu- und Abflußkreisläufe zu erzeugen. Dies geschieht dadurch, daß zwei aufeinanderfolgende Zellrahmen jeweils um 90° gedreht zueinander angeordnet werden, was eine quadratische Rahmengeometrie zwingend voraussetzt. Derartig aufgebaute Stapeleinheiten sind technisch und wirtschaftlich sinnvoll jedoch nur bis zu einer bestimmten Größenordnung einzusetzen. Anwendungsgrenzen ergeben sich dadurch, daß jede Membranflächenvergrößerung mit einer entsprechenden Vergrößerung der Seitenlänge des Zellrahmen-Quadrates einhergeht. Dies führt schon bei relativ geringer Steigerung der Membranfläche einer Zelle zu für die Praxis unhandlichen Membranstapeln. Zum anderen ist es durch die Strömungsführung in den alternierend angeordneten, jeweils um 90° gedrehten Stapeleinheiten durch den in Durchflußrichtung ansteigenden Druckabfall in jeder Zelle bedingt, daß lokale Druckunterschiede zwischen benachbarten Zellen entstehen und dadurch, wie schon erwähnt, eine einwandfreie und reproduzierbare Führung der Lösungen in großen Zellen nicht mehr gewährleistet ist. Die sich zwischen den einzelnen Zellen ausbildenden lokalen Druckdifferenzen sind eine Funktion der Seitenlänge des Zellrahmen-Quadrates; bei vergleichsweise großen Zellflächen und damit hohen Seitenlängen der Zellrahmenquadrate reicht die sehr begrenzte, ohnehin relativ geringe, Festigkeit der Membranen nicht mehr aus, diese Druckdifferenzen aus der diagonalen Strömungsführung sicher aufzunehmen.

Die in dieser Ausführungsform zwangsläufig diagonale Strömungsführung hat außerdem bei großer Membranfläche unerwünschte Konzentrationsgradienten-Felder zur Folge, so daß sich bei großtechnischer Anwendung der in der DE-OS 32 19 869 beschriebenen Membranstapeleinheit Zonen erhöhter und daher problematischer Konzentrationspolarisation ausbilden.

Die der vorliegenden Erfindung zugrundeliegende Aufgabe besteht nun darin, eine Membranstapeleinheit mit drei oder vier getrennten Kreisläufen so auszubilden, daß in einem Arbeitsgang die Abtrennung mehrerer Komponenten aus einer Lösung oder eine andere Behandlung mehrerer Lösungsströme ermöglicht wird, ohne daß dabei die beschriebenen Nachteile hinsichtlich der Druckdifferenzen aus der Strömungsführung, der Dichtigkeit sowie der Handhabbarkeit der Membranstapeleinheiten und der mit ihnen aufgebauten Membranstapel entstehen.

Die Aufgabe wird durch eine Membranstapeleinheit für die Elektrodialyse gemäß Anspruch 1 gelöst.

Die Unteransprüche beinhalten bevorzugte Ausführungsformen der Erfindung.

Die Versorgungs- und Verteilbohrungen, die auf zwei einander gegenüberliegenden Seitenrändern der Zellrahmen angeordnet sind, verbinden die einzelnen Elektrodialysekammern des gleichen Trennschrittes untereinander sowie mit den entsprechenden Versorgungs- und Verbindungssystemen der Endplatten. Diese Bohrungen sind auf den Schmalseiten der rechteckigen Zellrahmen angebracht. Die Tatsache, daß nur zwei einander gegenüberliegende Seitenränder für die Versorgung bzw. Entsorgung und die dafür notwendigen Bohrungen vorgesehen sind, ermöglicht es, daß die Zellrahmen bzw. die Membranfläche nicht zwingend quadratisch sein bzw. der Innenraum der Elektrodialysekammer einem Quader mit quadratischer Grundfläche entsprechen muß. Wie nachstehend ausgeführt wird, ist trotzdem die Erzeugung von mehr als zwei getrennten Elektrodialysekreisläufen möglich, was mit den bisher bekannten Membranstapeleinheiten ausgeschlossen war.

Der gesamte Membranstapel wird, abgesehen von den Endplatten, durch mehrere Zellrahmen-Einheiten gebildet, die jeweils aus zwei miteinander korrespondierenden Zellrahmenteilen sowie einer für eine Ionensorte selektiven Membran bestehen. Die Sequenz der Zellrahmen-Einheiten richtet sich nach dem speziellen Anwendungsfall. Die einzelnen Zellrahmen bestehen jeweils aus zwei Teilen, wobei auf der ebenen Rahmenfläche die jeweils zugehörige ionenselektive Membran angeordnet ist (i.e. Membranseite), wobei die Membran zwischen den Zellrahmen auch noch zusätzliche Dichtfunktion gegenüber der benachbarten Einheit übernehmen kann, aber dies nicht zwingend muß. Durch Aufeinanderlegen der jeweils anderen Zellrahmenflächen (i.e. Zellseite) wird eine Dialysekammer gebildet. Je zwei zueinander benachbarte und korrespondierende Zellrahmenteile zwischen zwei Membranen sind in ihrem Aufbau spiegelbildlich zueinander. In diesem Zusammenhang ist unter "spiegelbildlichem Aufbau" zu verstehen, daß die beiden Zellrahmenteile, bezogen auf eine zwischen ihnen parallel zur Membran verlaufende Ebene, spiegelsymmetrisch aufgebaut sind. Dies bedeutet, daß nicht nur die zu- bzw. abführenden Versorgungsbohrungen genau übereinander angeordnet sind, und die schon erwähnten Kanäle zu den Endplatten bilden, sondern auch Systeme von Verteilbohrungen von den entsprechenden Versorgungsbohrungen in die jeweilige Elektrodialysekammer führen. Die Verteilbohrungen der beiden einander benachbarten Zellrahmenteile weisen, jede sogenannte Bohrung für sich gesehen, einen etwa halbkreisförmigen Querschnitt auf. Durch Aufeinanderlegen der beiden spiegelbildlich zueinander aufgebauten Zellrahmenteile entstehen parallel zur Dichtfläche bzw. zur Membranfläche Verteilbohrungssysteme, wobei die einzelne Bohrung einen annähernd kreisförmigen Querschnitt aufweist. Die Verteilbohrungen werden also von den beiden Zellrahmenteilen je zur Hälfte definiert.

Je nach der erforderlichen Zahl von Prozeßströmen (3 oder 4), sind an den Seitenrändern der Zellrahmen eine entsprechende Anzahl von Versorgungsbohrungssystemen vorzusehen, die eine Führung der Prozeßströme senkrecht zur Membranebene ermöglichen. Die Zahl dieser Versorgungsbohrungen, die allgemein ein ganzzahliges Vielfaches der Anzahl der Prozeßströme ist und in der Praxis im Bereich von 4 bis 20 liegt, jedoch auch noch größer gewählt werden kann, ist weiter von der Breite der Kammer und damit von der geforderten Membranfläche je Zellkammer abhängig, da eine gleichmäßige Anströmung der Membranfläche nur dann gewährleistet ist, wenn der Zustrom der zu trennenden Lösung gleichmäßig über die gesamte Seitenlänge der Kammer und damit über die gesamte Membranfläche erfolgt. Analoge Überlegungen sind auch für das Abströmen der Lösungen anzustellen. Der Abzug der die jeweilige Kammer durchströmenden Lösung erfolgt auf der der Zufuhrseite gegenüberliegenden Seite der Elektrodialysekammer mit Hilfe von Verteilbohrungen und Versorgungsbohrungen der gleichen Geometrie und Anordnung zueinander, wie sie auch die Versorgungs- und Verteilbohrungen auf der Zufuhrseite aufweisen. Erfindungsgemäß werden alle Elektrodialysekammern in gleicher Richtung und parallel durchströmt.

Falls es sinnvoll für einen bestimmten Anwendungsfall sein sollte, so können die Prozeßströme auch gegenläufig geführt werden, solange die Membranen die sich dann ausbildenden Druckdifferenzen halten können.

Durch entsprechende, Anordnung der Verteilbohrungen in Systemen, die jeweils nur eine bestimmte und definierte Zahl von Versorgungsbohrungen strahlenförmig auf eine Seitenlänge einer Zelle sich gleichmäßig verteilend, mit der jeweiligen Elektrodialysekammer verbinden, wird erreicht, daß die Kammern gleichmäßig an- und abgeströmt werden. Dadurch wird ein hydraulisch exakt definierbares, in gebrauchsfertigem Zustand, d.h. bei aufeinandergelegten, symmetrisch zueinander angeordneten Zellrahmenteilen, röhrenförmiges An- und Abströmsystem für jede Kammer gebildet. Dieses System garantiert die erwünschte gleichmäßige Verteilung des jeweiligen Prozeßstromes aus den entsprechenden Verteilbohrungen auf die Kammer, da es geometrisch nicht variabel ist. Die Strömungsverteilung wird nicht in die Kammer selbst verlegt, da hier eine gleichmäßige Strömungsverteilung nicht mehr definiert werden kann. Vielmehr wird schon im Zellrahmenbereich durch diese Verteilsysteme die Verteilung der Prozeßströme vorgenommen, wodurch eine völlig gleichmäßige Verteilung der Prozeßströme auf die einzelnen Zellen möglich ist und so keine Zonen geringer Durchmischung der Lösungen und damit auch keine Zonen erhöhter Konzentrationspolarisation in den Zellen ausgebildet werden können.

Wichtig bei den erfindungsgemäßen wie auch den bisher bekannten Membranstapeleinheiten ist eine effiziente Abdichtung der einzelnen Prozeßströme gegeneinander.

Im Gegensatz zum Stand der-Technik, bei dem immer wieder gravierende Probleme in dieser Hinsicht auftraten, wird die Dichtung sowohl der durchgehenden Versorgungsbohrungen als auch der einzelnen An- und Abströmsysteme aufgrund der ebenen Konstruktion der Zellrahmen dadurch erreicht, daß die einzelnen Rahmenteile durch ihre flache Konstruktion auf der einen, und mit der Membran auf der anderen Seite ohne zusätzliche Konturendichtung flach gegeneinander und gegen die Umgebung abgedichtet werden. Dadurch wird nicht nur die Dichtleistung deutlich verbessert, sondern auch erreicht, daß keine voluminösen Dichtungssysteme bei einer größeren Zahl von Membraneinheiten zu einem für die Praxis ungeeigneten, weil nicht mehr handhabbaren und darüberhinaus unwirtschaftlichen Membranstapel führen.

Eine weitere konstruktive Vereinfachung resultiert daraus, daß jeweils zwei einander benachbarte, eine Elektrodialysekammer der Membranstapeleinheit bildende Zellrahmenteile spiegelbildlich zueinander aufgebaut sind. Durch diesen spiegelbildlichen Aufbau wird erreicht, daß man Membranstapel mit drei oder vier getrennten Kreisläufen, die in der Praxis für die meisten Trennprobleme ausreichen, aus nur zwei unterschiedlichen Zellrahmentypen aufbauen kann. Dies vereinfacht den konstruktiven Aufwand und führt zu einem ökonomischeren Einsatz der erfindungsgemäßen Membranstapeleinheiten.

Zudem kann mit dem erfindungsgemäßen System ein Membranstapel aufgebaut werden, der zum einen eine streng parallele Strömungsführung der einzelnen getrennten Kreisläufe aufweist und der zum anderen hinsichtlich der Membranfläche dadurch variiert werden kann, daß nur die Längsseiten der Zellen in der Größe verändert, d.h. vergrößert oder verkleinert werden können, ohne daß die Gesamtabmessungen des Membranstapels dadurch geometrischen Zwängen unterliegen. Gerade die in allen Zellen gleichmäßige und streng parallele Strömungsführung der einzelnen getrennten Kreisläufe hat zur Folge, daß es nicht mehr wie in bisher bekannten Einheiten zum Aufbau von unerwünschten lokalen Druckdifferenzen zwischen den einzelnen Kammern kommen kann. Entsprechend sind auch die Konzentrationsgradienten sowohl in Strömungsrichtung als auch senkrecht zur Strömungsrichtung aufgrund der Konstruktion der Zellrahmen für den Trennprozeß optimal.

Membranstapel, die für die praktische Anwendung in Trennprozessen mit drei oder vier unterschiedlichen Prozeßströmen geeignet sind, können bis zu einigen hundert Zellrahmeneinheiten, d.h. Zellen gemäß der vorliegenden Erfindung, aufweisen. Entscheidend für die Zahl der Einzelzellen ist das jeweilige Trennproblem, das nicht nur die Gesamtfläche der Trennmembranen, sondern auch die Verfahrensweglänge für den jeweiligen Trennprozeß bestimmt. Je nach den für das spezielle Trennproblem charakteristischen Erfordernissen können Membranfläche und Verfahrensweglänge über die Zahl der Zellrahmeneinheiten sehr leicht optimal angepaßt werden. Dabei führt auch eine im Falle einer notwendigen Vergrößerung der Membranfläche notwendig werdende Erhöhung der Anzahl der Zelleinheiten zu gut handhabbaren und für die Praxis geeigneten Membranstapeln, weil aufgrund der nicht-quadratischen Vorgabe der Zellrahmen ein limitierender geometrischer Zwang entfällt.

Die Erfindung wird im folgenden anhand eines Ausführungsbeispiels mittels der Figuren 1 bis 8 näher erläutert. Dabei zeigen
- Fig. 1: eine Aufsicht auf einen geteilten Zellrahmen eines der beiden gemäß der vorliegenden Erfindung geeigneten Typs I,
- Fig. 2: eine Aufsicht auf einen geteilten Zellrahmen des zweiten gemäß der Erfindung geeigneten Typs II,
- Fig. 3: einen Ausschnitt aus dem Membranstapel unter Aufsicht auf vier aufeinanderfolgende Zellrahmeneinheiten die jeweils aus zwei Zellrahmenteilen und einer Membran gebildet werden, und die jeweils verschiedene Prozeßströme führen,
- Fig. 4: einen Schnitt durch ein Anströmsystem in den Zellrahmen,
- Fig. 5: und 6 Aufsichten auf die beiden Endplattenschicht-Typen mit den unterschiedlichen Versorgungssystemen für die auf den Zellrahmen befindlichen Versorgungsbohrungen,
- Fig. 7: einen Schnitt durch eine Endplatteneinheit für vier getrennte Prozeßkreisläufe, und
- Fig. 8: beispielhaft ein Schema für eine aus vier Kammern bestehende Membranstapeleinheit.

An den einander gegenüberliegenden inneren Seitenrändern 1 und 2 (in Fig. 1) der rechteckigen, flach-ebenen Zellrahmenteile 3 des Typs (I), die vorzugsweise eine Dicke von 0,3 bis 1,5 mm haben, ist eine Mehrzahl von kanalartig vertieften, jeweils in fertigem Zustand je einen Querschnitt von etwa 0,04 mm² bis 6,5 mm² bildenden und etwa einen halbkreisförmigen Querschnitt aufweisenden Verteilbohrungen, zusammengefaßt in den Systemen 4, vorgesehen, durch die die Lösung aus den entsprechenden Versorgungsbohrungen 8 in die vom Zellrahmenteil 3 umfaßte Dialysekammer 6 geführt wird. Ein zweiter, zu dem beschriebenen Zellrahmen zur Achse 21 spiegelsymmetrisch aufgebauter Zellrahmen des gleichen Typs (I) - erzeugbar durch Drehung des Rahmens Typ (I) um die Achse 21 - weist die entsprechende andere Hälfte von kanalartig vertieften Strömungssystemen gleichen Querschnitts auf, so daß durch Aufeinanderlegen zweier Hälften derartiger, spiegelsymmetrisch zueinander aufgebauter Zellrahmen ein geschlossenes Strömungssystem entsteht, innerhalb dessen von den entsprechenden Versorgungsbohrungen 8 die zu trennende Lösung durch kanalartige Röhren in die Dialysekammer 6 eingeführt wird. Die derartig hydraulisch genau definierten rohrartigen Anströmsysteme sorgen durch ihre Ausbildung für eine gleichmäßige Anströmung bzw. Abströmung des Zellrahmens 6 über die beiden Seitenränder 1 bzw. 2.

Der zweite Zellrahmen-Typ (II) (vgl. Fig. 2) zeichnet sich dadurch aus, daß die Versorgungsbohrungen 9 über entsprechend, wie oben beschrieben, kanalartig vertiefte Verteilbohrungen, zusammengefaßt in Systemen 5, mit dem Inneren der Dialysekammer 6 in Verbindung stehen. Auch hier werden durch Aufeinanderlegen zweier zur Achse 22 spiegelsymmetrisch zueinander aufgebauter Zellrahmenteile des gleichen Typs (II) - Drehung um Achse 21 - hydraulisch genau definierte rohrartige Anström- und Abströmsysteme für das Zellinnere definiert, so daß eine gleichmäßige Anströmung bzw. Abströmung des Zellrahmens 6 über die Seite 1 bzw. über die Seite 2 erfolgt.

Wie anhand von Fig. 1 und 2 leicht erkannt wird, wird mit Hilfe der beiden Zellrahmen-Typen I und II (in Fig. 1 bzw. Fig. 2) ein Trennsystem mit zwei getrennten Prozeßkreisläufen definiert. Eine Drehung der zusammengesetzten oben beschriebenen und eine fertige Zelle bildenden Rahmentypen um 180° um die Achse 20 führt zu zwei weiteren, im Typ identischen Zellrahmen, in denen - bei Übereinanderlegen der jeweiligen Zellrahmen - zwei weitere Versorgungsbohrungen 11 und 10 (vgl. Fig. 3) vorhanden sind, 11 wird durch diese Drehung aus 8 bzw. 10 aus 9 erzeugt, wobei diese Versorgungsbohrungen ebenfalls von den Endplatten her angeströmt werden können und über die die jeweiligen Verteilungsbohrungssysteme für die jeweilige Zellkammer angeströmt werden. Die für die Fig. 1 und 2 beschriebenen Vorteile gelten natürlich in analoger Weise auch für die die beiden weiteren Prozeßkreisläufe definierenden Zellrahmeneinheiten.

In die aus zwei aufeinanderliegenden Zellrahmen 3 gebildete Zellkammer (entsprechend 6) wird als Abstandhalter für die beidseitig aufliegenden Membranen ein den geometrischen Abmessungen der Kammer 6 angepaßtes netzförmiges Gewebe 7 eingelegt. Dieses dient nicht nur als mechanische Stütze und als Abstandhalter für die Membran, sondern gleichzeitig auch als Turbulenzpromotor und sorgt in der Zelle 6 dafür, daß eine gleichmäßige Turbulenz der Strömung über die gesamte Membranoberfläche erzeugt wird und somit die Grenzschichtdicke auf den Membranen definierbar wird.

Die parallel zur Membranfläche im Zellrahmen verlaufenden Verteilbohrungssysteme 4 und 5 stehen mit den Versorgungsbohrungen 8 und 9 auf den Seitenrändern der Zellrahmen 3 in Verbindung. Die Versorgungsbohrungen 8 und 9 in den Seitenrändern der Zellrahmen 3 korrespondieren nicht nur mit den Bohrungen in den Membranen und Endplatten, sondern sind darüberhinaus auch noch geometrisch so angeordnet, daß bei den zur Erzeugung eines Mehrkammerstapels notwendigen Drehungen der Zellrahmenteile 3 der Fig. 1 und 2 der freie Strömungsquerschnitt in diesen Versorgungsbohrungen 8 und 9 und den nach Drehungen dazu korrespondierenden Versorgungsbohrungen 10 und 11 (Fig. 3) durchgehend bis zu den Endplatten gewahrt bleibt.

Der Zellrahmenteil 3 in Fig. 1 unterscheidet sich vom Zellrahmenteil 3 in Fig. 2 nur durch die Ausbildung und Zuordnung der Verteilbohrungssysteme 4 und 5 zu den Versorgungsbohrungen 8 und 9. Während die Versorgungsbohrungen in ihrer nicht zugeordneten Gesamtheit symmetrisch zu den Achsen 20 und 21 der Zellrahmen angeordnet sind, sind die Verteilungsbohrungen 4 und 5 im Typ (I) der Fig. 1 und im Typ (II) der Fig. 2 hinsichtlich der Achse 20 asymmetrisch, jedoch hinsichtlich der Achse 21 (in Fig. 1 und 2) symmetrisch. Durch diese Kombination von Symmetrie/Asymmetrie der Strömungsführungsvorrichtungen ist es mit zwei unterschiedlichen Zellrahmen-Typen (I) und (II) möglich, einen Mehrkammer-Membranstapel mit drei oder vier getrennten Kreisläufen zu erzeugen, wobei darüber hinaus das Prinzip der geteilten Zellrahmen mit den dargestellten Vorteilen beibehalten werden kann.

Die beiden Seitenränder 12 und 13 des Zellrahmenteils 3 haben gemäß dem wie oben beschrieben aufgebauten Membranstapel keine Versorgungs- und Entsorgungsfunktion mehr zu übernehmen. Dadurch stehen diese beiden Seiten ohne Einschränkung für eine Variation der Seitenlänge der Zellrahmen und damit natürlicherweise auch der Membranfläche und der Verfahrensweglänge pro Einheit zur Verfügung. Dadurch läßt sich das durch die vorliegende Anmeldung beschriebene Prinzip auf Membranflächen jeder beliebigen Größe leicht übertragen.

Fig. 3 zeigt die geometrische Anordnung der oben beschriebenen Membranstapeleinheiten gemäß der vorliegenden Erfindung. Die Zellrahmenteile 22 und 26 entsprechen den oben beschriebenen Zellrahmen des Typs (I), wobei, 26 ein Zellrahmenteil des Typs (I) in der in Fig. 1 dargestellten Anordnung ist und 22 dadurch entsteht, daß der in Fig. 1 dargestellte Zellrahmenteil um 180° um die Achse 21 gedreht wurde. Entsprechendes gilt auch für die Zellrahmenteile 27 und 23 in Fig. 3: 27 entspricht dem oben beschriebenen Zellrahmen des Typs (II), der in Fig. 2 dargestellt ist, während 23 aus dem in Fig. 2 dargestellten Zellrahmen durch Drehung um 180° um die Achse 21 entsteht. Die jeweiligen Zellen entstehen durch Aufeinanderlegen der beiden Zellrahmen, die - wie beschrieben - zueinander in bestimmter Weise spiegelsymmetrisch aufgebaut sind. Zwischen den einzelnen Zellrahmenteilen 22 und 27, 23 und 28, 24 und 29, sowie weiter fortfahrend zwischen 25 und 26, wobei sich hier der Kreis schließt, sind die Membranen 30 angeordnet, deren Bohrungen auf den beiden einander gegenüberliegenden Seiten mit den Versorgungsbohrungen der Zellrahmen übereinstimmen. Die Zellrahmenkombination 25/29 wurde erzeugt durch eine 180°-Drehung der Kombination 22/26 um die Achse 20 (vgl. Fig. 1 und 2), entsprechend die Zellrahmenkombination 24/28 aus 23/27.

Wie aus Fig. 3 zu erkennen ist, werden die Elektrodialysekammern der Zellrahmenkombination 22/26 über die Versorgungsbohrungen 8 mit Lösung versorgt. Bei den hier dargestellten insgesamt 4 x 3 = 12 Bohrungen auf jeder der beiden einander gegenüberliegenden Seiten, 4 steht hier für die Anzahl der Prozeßströme, sind dies für die Zellrahmenkombination 22/26 (von dem linken Rand an gezählt) die erste, fünfte und neunte Bohrung, die über die Verteilsysteme mit dem Inneren der jeweils gebildeten Kammer in Verbindung stehen. Die durch diese Versorgungsbohrungen herangeführte Lösung wird über die sternförmig von den Bohrungen ausgehenden Verteilbohrungssysteme, die in Fig. 3 gestrichelt dargestellt sind und in Wirklichkeit zwischen den Zellrahmen-Hälften liegen und dadurch in der Abbildung nicht zu sehen sind, in das Zellinnere geführt und dort mit den auf den Seiten der Zellrahmen aufgebrachten Membranen 30 in Kontakt gebracht.

Die durch die Zellrahmenkombination 23/27 begrenzte Elektrodialysezelle wird von den Endplatten her über die Bohrungen 9 versorgt. Dies sind (wiederum vom linken Rand des Zellrahmens gezählt) die zweite, sechste und zehnte Bohrung. In analoger Weise wie bei der Zellrahmenkombination 22/26 wird die Lösung über die (gestrichelt dargestellten) Verteilbohrungen in das Zellinnere geführt und dort mit den Membranen 30 in Kontakt gebracht.

Analoge Überlegungen gelten auch für die Zellrahmenkombinationen 24/28 und 25/29, bei denen die Versorgungsbohrungen 10 und 11 jeweils (vom linken Rand des Zellrahmens gezählt) die dritte, siebte und elfte, bzw. vierte, achte und zwölfte Bohrung auf den Seitenrändern der jeweiligen Zellrahmen sind. Auch hier sind die Verteilbohrungssysteme gestrichelt dargestellt, weil nicht zu sehen.

Fig. 3 ist ebenfalls zu entnehmen, daß die Zellrahmen jeweils aus zwei zueinander spiegelsymmetrisch aufgebauten Zellrahmenteilen, die in den einzelnen unterschiedlichen räumlichen Lagen mit 22 bis 29 bezeichnet sind, aufgebaut sind. Die einzelnen Zellrahmen sind, wie oben beschrieben, jeweils durch eine Membran voneinander getrennt.

Das in Fig. 3 beschriebene System unterscheidet sind von den quadratischen Systemen des Standes der Technik dadurch, daß die herkömmlichen Zellrahmensysteme jeweils nur zwei Prozeßkreisläufe, mit einer Zellversorgung in zwei sich gegenüberliegenden Seiten der Zellrahmen, unterbringen konnten. Vier Kreisläufe wurden dadurch erzeugt, daß alle vier Seiten dieser Rahmen für die An- und Abströmung der Zellen herangezogen wurden, was den schon beschriebenen diagonalen Strömungsverlauf, von Zelle zu Zelle um 90° verdreht, mit den beschriebenen Nachteilen ergibt. Im Gegensatz dazu werden bei der erfindungsgemäßen Mehrkammer-Membranstapeleinheit in nur zwei einander gegenüberliegenden Seiten eines Rechtecks die Versorgung und die Entsorgung der Elektrodialysezellen für beispielsweise vier getrennte Kreisläufe untergebracht. Dies geschieht in der Form, daß eine gleichmäßige Zu- und Abströmung der Zellkammer in jeder Zelle mit gleicher Sicherheit gewährleistet ist und dadurch ein streng paralleler Verfahrensweg durch die erfindungsgemäße Anordnung erzwungen wird.

Dies wird in Fig. 4 nochmals verdeutlicht. 22 und 26 stellen dabei die beiden spiegelsymmetrisch zueinander aufgebauten Zellrahmenteile dar, die auf je einer Seite der flachen Rahmen mit einer Membran 30 beaufschlagt sind. Durch die Versorgungsbohrungen 8 wird die zu trennende Lösung herangeführt, die durch Verteilbohrungen aus Systemen 4 bzw. 5 ins Zellinnere 6 geführt und damit dem elektrischen Feld ausgesetzt wird. Die elektrische Potentialdifferenz bewirkt eine Trennung der Kationen und Anionen, die nur die jeweils für sie spezifische Membran passieren können. Der Lösungsstrom im Inneren der Elektrodialysezelle 6 verarmt somit an Ionen oder wird je nach Membrananordnung aufkonzentriert. Zur Stütze der Membran und zur Verbesserung der Strömungsführung in, Gesamtsystem dient das in seinen geometrischen Abmessungen der Größe der Kammer 6 angepaßte netzförmige Gewebe 7.

In Anwendungsfall werden entsprechend vormontierte Einheiten 15, 16, 17 und 18 (Fig. 3), bestehend aus einer Folge Rahmen, Membran, Rahmen, in der vorbeschriebenen Weise gestapelt. Diese vorgefertigten Einheiten haben den Vorteil, daß die sehr empfindlichen Membranen an einem dafür geeigneten Ort zwischen die Zellrahmen gelegt werden und auch dort schon soweit befestigt werden können, daß sie für die weitere Verarbeitung, die oft unter für die Membranen nicht zuträglichen Bedingungen stattfindet, zumindestens etwas geschützt sind und darüber hinaus dadurch die Stapelung wesentlich vereinfacht wird.

Fig. 5 zeigt die Aufsicht auf eine Endplatte 35, welche über Zu- und Abflußbohrungen 34 und ein Verteil- bzw. Sammelsystem 31 die Versorgung und Entsorgung des Membranstapels für einen Lösungskreislauf auf die Versorgungsbohrungen 8 vornimmt. Durch Drehung der Endplatte 35 um die Achse 20 erhält man (mit demselben Endplatten-Typ) eine weitere Endplatte, mit der die Versorgungsbohrungen 11 versorgt und entsorgt werden können, wodurch der zweite Kreislauf gebildet wird. Die in Fig. 5 dargestellten Bohrungen 33 sind diejenigen Durchführungsbohrungen für die Ein- und Ausspeisung der benachbarten Endplattenschicht, welche in Fig. 6 dargestellt ist. Die in Fig. 6 dargestellte Endplattenschicht 36 versorgt und entsorgt entsprechend den für Fig. 5 angegebenen Erläuterungen über die Bohrungen 33 und die Verteilsysteme 32 die Versorgungsbohrungen 9, womit sich der dritte Kreislauf ergibt. Entsprechend kann auch diese Endplatte 36 um die Achse 20 um 180° gedreht werden, wobei dann eine Versorgung der Versorgungsbohrungen 10 möglich ist, was dem vierten Kreislauf entspricht.

Die Versorgungsbohrungen 8, 9, 10 und 11, welche natürlich zahlenmäßig und geometrisch den jeweiligen Zellrahmen angepaßt sind und welche die vier getrennten Kreisläufe auf die einzelnen Membrankammern verteilen, liegen (genau wie die Bohrungen 33 und 34) zur Achse 20 symmetrisch. Dadurch bleiben diese Bohrungen bei der zur Erzeugung der Einspeisung und Ausspeisung von vier getrennten Kreisläufen notwendigen Drehungen der Endplatten 35 und 36 um die Achse 20 im System deckungsgleich. Durch die unterschiedliche Asymmetrie der Verteilersysteme 31 und 32 zur Achse 20 werden durch Drehung der Endplatten 35 und 36 die benötigten vier getrennten Kreisläufe für die zu trennenden Lösungen erzeugt.

Fig. 7 verdeutlicht dieses Prinzip nochmals. Eine gesamte Endplatteneinheit ist (vom Membranstapel her gesehen) aus den Plattenschichten 35, 36, 39, 37 und 38 aufgebaut. Die Plattenschicht 38 ist eine um die Achse 20 gedrehte Plattenschicht 35; entsprechend ist die Plattenschicht 37 eine um die Achse 20 gedrehte Plattenschicht 36.

Die beiden unterschiedlichen Systeme werden getrennt durch eine Dichtplatte 39, die im wesentlichen nur die Versorgungsbohrungen 8, 9, 10 und 11 aufweist und ansonsten die beiden Systeme 35, 36 und 37, 38 gegeneinander abdichtet. Desweiteren enthält die Plattenschicht 35, die dem Membranstapel zugewandt ist, die Elektrodenzelle 40. Diese Elektrodenzelle 40 wird über einen separaten Kreislauf, der hier nicht dargestellt ist, gespült. Die Elektrodenzelle 40 nimmt außerdem die jeweilige Elektrode auf.

Ein weiteres Merkmal des Endplatten-Schichtsystems ist darin zu erkennen, daß mit den beiden Endplatten-Typen 35 und 36 (Fig. 5 bzw. Fig. 6) unter Verwendung der Dichtplatte 39 vier getrennte Kreisläufe entstehen, mit denen die oben beschriebenen Membranstapeleinheiten mit Lösung versorgt bzw. von der Lösung entsorgt werden können. Durch die in strömungstechnischer Hinsicht optimierbaren Verteil- und Sammelsysteme 31 und 32 wird in vorteilhafter Weise gewährleistet, daß sich auch, wie in der Stapeleinheit gegeben, in dieser Endplatteneinheit keine Druckdifferenz zwischen den einzelnen getrennten Kreisläufen aufbauen kann. Außerdem ist es als vorteilhaft anzusehen, daß die Endplatteneinheiten relativ einfach aufgrund der begrenzten Anzahl der einzelnen Systemkomponenten hergestellt werden können, was zu erheblichen Kosteneinsparungen führt. Auch sind Endplattensysteme denkbar, die einen Membranstapel jeweils nur ein- bzw. ausspeisen.

In Fig. 8 ist beispielhaft ein Schema für einen Membranstapel mit vier Prozeßkreisläufen dargestellt. Die Elektrodialysekammern 41, 42, 43 und 44 sind gegeneinander durch Kationen-Austauschermembranen 49 und Anionen-Austauschermembranen 48 abgedichtet. Sie werden über die in den vorangehend erläuterten Figuren erwähnten Versorgungsbohrungen bzw. Verteilbohrungssystemen mit den jeweiligen Lösungen versorgt. Dabei enthält die zu reinigende Lösung beispielsweise ein wasserlösliches Alkalimetallsalz, z.B. ein Natriumsalz einer organischen Säure (NaR), sowie nichtionische organische Verunreinigungen (OV). Die über die Kammern 41 zugeführte Lösung soll von den ionischen Verunreinigungen befreit, die Verunreinigungen konzentriert und in die korrespondierende freie Säure überführt werden.

In Fig. 8 sind außerdem die jeweiligen Endplatteneinheiten mit den Einrichtungen für die Zufuhr und Abfuhr der zu behandelnden Lösungen sowie die korrespondierenden Versorgungs- und Verbindungssysteme sowie die jeweiligen Elektroden 40 zu sehen.

Nach Anlegen einer elektrischen Spannung an die Elektroden 40, von denen auf der rechten Seite die Anode und auf der linken Seite die Kathode dargestellt sind, werden bei Durchfluß der Lösungen durch die jeweiligen Elektrodialysekammern die einzelnen Ionen selektiv durch die jeweiligen Membranen transportiert. Dabei wandern die Kationen aus den beiden Kammern 41 durch die Kationen-selektiven Membranen 49 in die benachbarten Kammern 44, sowie die Anionen durch die anionenselektive Membran 48 in die benachbarte Kammer 42, so daß die verunreinigte Lösung entsalzt wird und nur noch die nichtionischen, organischen Verunreinigungen OV enthält, die im elektrischen Feld nicht transportiert werden.

Der Elektrodialysekammer 43 wird eine starke Säure, beispielsweise eine Mineralsäure wie Salzsäure, zugeführt. Im elektrischen Feld wandern deren Kationen durch die Kationen-selektive Membran 49 in die benachbarte Elektrodialysekammer 42, während deren Anionen durch die Anionen-selektive Membran 48 in die benachbarte Kammer 44 wandern. In der Kammer 42 entsteht somit die reine organische Säure (HR), die sich über die entsprechenden Entsorgungssysteme abziehen läßt, während aus den Kammern 41 die zu reinigende Lösung gegebenenfalls mit den nichtionischen organischen Verunreinigungen (OV) abgezogen wird. Außerdem wird aus den Kammern 44 eine mit Natriumchloridionen angereicherte Lösung erhalten.

Das Ergebnis ist eine gereinigte, konzentrierte organische Säure bzw. eine aufkonzentrierte Salzlösung, die im vorgegebenen Beispiel als Nebenprodukt Natriumchlorid ergibt.

Die erfindungsgemäßen Membranstapeleinheiten lassen sich in einer Vielzahl von Anwendungen einsetzen. Aus der großen Zahl sind nur die Reinigung und Entsalzung von Meerwasser oder Brackwasser, die Herstellung von an Ionen verarmtem Kesselspeisewasser, die Reinigung von Spüllösungen aus galvanischen Verfahren unter Wiedererhalt der Wertstoffe, Elektrodialyseverfahren in der Herstellung und Reinigung von Lebensmitteln, Elektrodialyseverfahren in pharmazeutischen Herstellungsprozessen oder auch die Wasserdissoziation durch Elektrodialyse unter Verwendung von bipolaren Membranen angegeben. Gerade bei letzterem Verfahren müssen Membranstapel mit drei oder vier getrennten Prozeßkreisläufen verfügbar sein. Dabei werden in diesem Feld auch heute schon große Membranflächen eingesetzt, die unter Anwendung der erfindungsgemäßen Membranstapeleinheiten relativ leicht und in verfahrenstechnischer Hinsicht optimal in einem Membranstapel verwirklicht werden können.

Desweiteren können beispielsweise in Dreikammerprozessen, die ebenfalls mit den erfindungsgemäßen Membranstapeleinheiten anlagentechnisch beherrscht werden, Aminosäuren aus einem aus der Hydrolyse von Proteinen stammenden Aminosäuregemisch voneinander dann getrennt werden, wenn deren isoelektrische Punkte bei verschiedenen pH-Werten liegen. Eine entsprechende pH-Wert-Einstellung der Rohlösung wird dazu benutzt, um entgegengesetzte Ladungen der verschiedenen Aminosäuren zu bewirken. Die unterschiedlich geladenen Aminosäuren werden sodann in einem Dreikammerprozeß mit, alternierender Membranfolge, bestehend aus je einer Kationen-Austauschermembran und einer Anionen-Austauschermembran, voneinander getrennt.

## Patentansprüche

1. Membranstapeleinheit für Mehrkammer prozesse für die Elektrodialyse, bestehend aus einer Mehrzahl von ionenselektiven Membranen, Endplatten mit Einrichtungen für die Zufuhr und Abfuhr der zu behandelnden Lösungen, den korrespondierenden Versorgungs- und Verbindungssystemen und den Elektroden sowie zweiteiligen Zellrahmen, auf denen auf einer Rahmenfläche die jeweils zugehörige ionenselektive Membran aufgelegt und/oder befestigt ist, während durch Aufeinanderlegen der jeweils anderen Zellrahmenflächen zwischen zwei benachbarten Membranen eine Dialysekammer gebildet ist,
(a) je zwei einander benachbarte, eine Elektrodialysekammer des Membranstapels bildende Zellrahmenteile (3) spiegelbildlich zueinander, bezogen auf eine zwischen ihnen parallel zur Membran (30) verlaufende Ebene, aufgebaut sind,
(b) alle Zellrahmenteile (3) der Membranstapeleinheit auf genau zwei einander gegenüberliegenden, zusätzlich als Dichtfläche wirkenden Seitenrändern (1,2) Versorgungs- und Verbindungsbohrungen (8,9) und (10,11) geeigneter Querschnittsform senkrecht zur Membranebene aufweisen, die im einzelnen einen hydraulischen Querschnitt von etwa 100 bis 500 mm² haben, und alternierend mit den Zufluß- und Abflußeinheiten (33,34) der Endplatten (35,36) in Verbindung stehen,
(c) je zwei eine Elektrodialysekammer bildende Zellrahmenteile (3) der Membranstapeleinheit parallel zur Dichtfläche Verteilbohrungssysteme (4,5) aufweisen, die die Versorgungsbohrungen (8,9) und (10,11) strahlenförmig mit dem Kammerinneren (6) verbanden und im einzelnen hydraulische Querschnitte von 0,04 bis 6,5 mm² je Bohrung haben und welche von den beiden spiegelbildlich zueinander angeordneten Zellrahmenteilen (3) je zur Hälfte definiert werden, und
(d) die durchgehenden Versorgungs- und Verbindungsbohrungen (8,9) und (10,11) sowie die Verteilbohrungssysteme (4,5) gegeneinander und gegen die Umgebung ohne Konturendichtung durch die Rahmen selbst flach abgedichtet sind,
(e) zwei unterschiedliche Zellrahmenteile der Typen I und II und Endplatten vorhanden sind, die zu Stapeln mit n verschiedenen Prozeßströmen angeordnet sind, wobei n = 3 oder 4 sein kann und wobei die Versorgungsbohrungen (8,9,10,11) auf den Schmalseiten der rechteckigen nicht quadratischen Zellrahmen angebracht sind,
(f) die spiegelbildlich aufgebauten Zellrahmentypen I und II sich durch die Ausbildung und Zuordnung der Verteilungsbohrsysteme (4) und (5) zu den Versorgungsbohrungen (8) und (9) derart unterscheiden, daß bei Rahmentyp I das Verteilungsbohrsystem (4) jeweils mit dem 1., 1+n., 1+2n. --- Versorgungsbohrsystem (8) und bei Rahmentyp II das Verteilungsbohrsystem (5) jeweils mit dem 2., 2+n., 2+2n --- Versorgungsbohrsysteme (9) verbunden sind.

2. Membranstapeleinheit nach Anspruch 1, dadurch gekennzeichnet, daß auf jeweils gegenüberliegenden Seitenrändern der Zellrahmenteile (3) für jeden zu erzeugenden Kreislauf mindestens je drei Versorgungs- und Verbindungsbohrungen (8,9) und (10,11) angeordnet sind.

3. Membranstapeleinheit nach Ansprüchen 1 oder 2, dadurch gekennzeichnet, daß die Anzahl der Versorgungsbohrungen auf den Seitenrändern der Zellrahmenteile ein ganzzahliges Vielfaches der Zahl der Prozeßströme beträgt.

4. Membranstapeleinheit nach Ansprüchen 1 bis 3, dadurch gekennzeichnet, daß in die Elektrodialysekammer (6) ein an die geometrischen Abmessungen der Elektrodialysekammer angepaßtes netzförmiges Gewebe eingelegt wird.

5. Verwendung der Membranstapeleinheit nach Ansprüchen 1 bis 4 zur Abtrennung von Salzen, Säuren und Basen aus wässrigen Lösungen, zur Abtrennung von ionischen Verbindungen aus deren wässrigen Lösungen oder aus Mischungen mit neutralen Molekülen und zur Abtrennung von einwertigen Ionen von Ionen mit Mehrfachladung.

6. Verwendung der Membranstapeleinheit nach Ansprüchen 1 bis 4 zur Entsalzung von Wasser, industriellen Abwässern, Seewasser oder Lösungen aus der Lebensmittel- oder Arzneimittelverarbeitung.

7. Verwendung der Membranstapeleinheit nach Ansprüchen 1 bis 4 zur Wiedergewinnung von Wertstoffen aus Industrieabwässern sowie aus Lösungen aus der Lebensmittel- und Arzneimittelverarbeitung.

8. Verwendung der Membranstapeleinheit nach Ansprüchen 1 bis 4 in der Aminosäuretrennung.

9. Verwendung der Membranstapeleinheit nach Ansprüchen 1 bis 4 zur Dosierung bzw. Konditionierung in bzw. von Prozeßströmen aus anderen Prozeßströmen oder in Verbindung mit anderen Prozeßströmen.

## Claims

1. A membrane-stack unit for multi-compartment processes for the electrodialysis, consisting of a plurality of ion-selective membranes, end plates with equipment for the infeed and drainage of the solutions being treated, the corresponding supply and connection systems and the electrodes as well as two-part cell frames, on which the respectively associated ionselective membrane is placed and/or fastened on one frame surface, while a dialysis compartment has been formed by placing each of the respectively other cell-frame surfaces between two neighboring membranes, whereby
(a) each two mutually neighboring cell-frame parts (3), which form an electrodialysis compartment of the membrane stack, are constructed in mirror-image fashion with respect to one another, relative to a plane which runs between them parallel to the membrane (30);
(b) all cell-frame parts (3) of the membrane-stack unit have supply and connection holes (8, 9) and (10, 11) having a suitable cross section shape perpendicular to the membrane plane, which individually have a hydraulic cross section of from 100 to 500 mm², said supply and connection holes (8, 9) and (10, 11) are situated on exactly two side edges (1, 2) facing each other which additionally act as a sealing surface, and said supply and connection holes are alternatingly connected with the infeed and drainage units (33, 34) of said end plates (35, 36);
(c) every pair of cell-frame parts (3) which form an electrodialysis compartment in the membrane-stack unit have distribution hole systems (4, 5) parallel to the sealing surface, which distribution hole systems connect the supply holes (8, 9) and (10, 11) radially with the interior of the compartment (6) and individually have hydraulic cross sections per hole of from 0.04 to 6.5 mm² and which are defined by the pair of cell-frame units (3) that are disposed in mirror-image fashion with respect to one another, one-half each; and
(d) the penetrating supply and connection holes (8, 9) and (10, 11) as well as the distribution hole systems (4, 5) are flatly sealed against the environment by the frames themselves without contour seals;
(e) two different cell-frame parts of the types I and II and end plates are present, which have been arranged to form stacks with n different process streams, wherein n may be 3 or 4, and where the supply holes (8, 9, 10, 11) have been located on the narrow side of the rectangular non-square cell frames,
(f) the cell-frame types I and II constructed in mirror-image fashion are distinguished by the formation and assignment to the supply holes (8) and (9) of the distribution hole systems (4) and (5) in such a manner that in frame type I the distribution hole system is connected with the 1st, (1+n)th, (1+2n)th ... etc. supply hole system (8), and in frame type II the distribution hole system (5) is connected with the 2nd, (2+n)th, (2+2n)th ... etc. supply hole system (9).

2. A membrane-stack unit according to claim 1, characterized in that at least three supply holes (8, 9) and three connection holes (10, 11) have been disposed on each of the respective opposite side edges of the cell-frame parts (3) for each circulation stream that is to be produced.

3. A membrane-stack unit according to claims 1 or 2, characterized in that the number of supply holes on the side edges of the cell-frame parts amounts to an integer multiple of the number of process streams.

4. A membrane-stack unit according to claims 1 to 3, characterized in that a net-like fabric has been inserted into the electrodialysis compartment (6), which fabric has been adapted to fit the geometric dimensions of the electrodialysis compartment.

5. Use of the membrane-stack unit as defined in claims 1 to 4 for the separation of salts, acids and bases from aqueous solutions, for the separation of ionic compounds from their aqueous solutions or from mixtures with neutral molecules and for the separation of monovalent ions from ions bearing multiple charges.

6. Use of the membrane-stack unit as defined in claims 1 to 4 for desalting water, industrial waste water, sea water or solutions from food or drug processing.

7. Use of the membrane-stack unit as defined in claims 1 to 4 for recovering valuable materials from industrial waste waters and from solutions from food or drug processing.

8. Use of the membrane-stack unit as defined in claims 1 to 4 in the separation of amino acids.

9. Use of the membrane-stack unit as defined in claims 1 to 4 for metering and/or conditioning in or of process streams from other process streams or in combination with other process streams.

## Revendications

1. Unité de membranes empilées pour précédés à chambres multiples destinés à l'électrodialyse, comprenant une série de membranes sélectives d'ions, des plaques terminales pourvues d'agencements d'amenée et d'évacuation des solutions à traiter, les systèmes d'alimentation et de raccordement correspondants et les électrodes ainsi que des châssis cellulaires en deux parties sur lesquels la membrane sélective d'ions respective s'appuie et/au est fixée sur une surface du châssis, tandis qu'est formée une chambre de dialyse par superposition des autres surfaces de châssis cellulaires respectives entre deux membranes voisines, caractérisée en ce que
(a) deux parties de châssis cellulaires (3) respectives voisines l'une de l'autre et formant une chambre d'électrodialyse de la pile de membranes sont montées en image symétrique par rapport à un plan s'étendant entre elles parallèlement à la membrane (30),
(b) toutes les parties de châssis cellulaires (3) de l'unité de membranes empilées présentent de plus sur exactement deux bords latéraux (1, 2) en regard l'un de l'autre et jouant également le rôle de surfaces d'étanchéité des perçages d'alimentation et de raccordement (8, 9) et (10, 11) de forme en section transversale appropriée perpendiculairement au plan de la membrane, qui ont individuellement une section transversale hydraulique d'environ 100 à 500 mm², et sont alternativement en communication avec les unités d'amenée et d'évacuation (33, 34) des plaques terminales (35, 36)
(c) deux parties de châssis cellulaires respectives (3) formant une chambre d'électrodialyse de l'unité de membranes empilées présentent parallèlement à la surface d'étanchéité des systèmes de perçage de répartition (4, 5) qui raccordent en faisceau les perçages d'alimentation (8, 9) et (10, 11) avec l'intérieur (6) de la chambre et ont individuellement des sections transversales hydrauliques de 0,04 à 6,5 mm² par perçage et qui sont définis respectivement par les deux parties de châssis cellulaires (3) agencés en image symétrique l'une par rapport à l'autre pour moitié, et
(d) les perçages d'alimentation et d'évacuation traversants (8, 9) et (10, 11) ainsi que les systèmes de perçage de répartition (4, 5) sont étanchés à plat les uns vis-à-vis des autres et vis-à-vis de l'extérieur sans étanchéité de contour par les châssis eux-mêmes,
(e) on prévoit deux parties de châssis cellulaires différentes de types I et II et des plaques terminales qui sont agencées en piles avec n différents flux à traiter, n étant égal à 3 ou à 4 et les perçages d'alimentation (8, 9, 10, 11) étant ménagés sur les côtés étroits des châssis cellulaires rectangulaires et non carrés, et
(f) les types de châssis cellulaires I et II montés en image symétrique se distinguent en raison de la conformation et de l'agencement des systèmes de perçage de répartition (4) et (5) vis-à-vis des perçages d'alimentation (8) et (9) par le fait que, dans le type de châssis I, le système de perçage de répartition (4) est raccordé respectivement au ler, au (1 + n)ième, au (1 + 2n)ième, ... systèmes de perçage d'alimentation (8) tandis que, dans le type de châssis II, le système de perçage de répartition (5) est raccordé respectivement au 2ième, au (2 + n )ième, au (2 + 2n)ième, ... système de perçage d'alimentation (9).

2. Unité de membranes empilées selon la revendication 1, caractérisée en ce que sur des bords latéraux respectivement en regard des parties de châssis cellulaires (3) sont agencés au moins trois perçages d'alimentation et de raccordement respectifs (8, 9) et (10, 11) pour chaque circuit à constituer.

3. Unité de membranes empilées selon la revendication 1 ou 2, caractérisée en ce que le nombre de perçages d'alimentation sur les bords latéraux des parties de châssis cellulaires est un multiple entier du nombre de flux à traiter.

4. Unité de membranes empilées selon les revendications 1 à 3, caractérisée en ce que dans la chambre d'électrodialyse (6) est inséré un tissu maillé adapté aux dimensions géométriques de la chambre d'electrodialyse.

5. Emploi de l'unité de membranes empilées selon les revendications 1 à 4 pour la séparation de sels, d'acides et de bases de solutions aqueuses, pour la séparation de composés ioniques de leurs solutions aqueuses ou de mélanges avec des molécules neutres ainsi que pour la séparation d'ions monovalents d'ions à charge multiple.

6. Emploi de l'unité de membranes empilées selon les revendications 1 à 4 pour le dessalement de l'eau, d'eaux usées industrielles, d'eau de mer ou de solutions provenant du traitement de produits alimentaires ou de produits pharmaceutiques.

7. Emploi de l'unité de membranes empilées selon les revendications 1 à 4 pour la récupération de matières premières d'eaux usées industrielles ainsi que de solutions provenant du traitement de produits alimentaires ou de produits pharmaceutiques.

8. Emploi de l'unité de membranes empilées selon les revendications 1 à 4 pour la séparation d'acides aminés.

9. Emploi de l'unité de membranes empilées selon les revendications 1 à 4 pour le dosage ou le conditionnement de flux à traiter à partir d'autres flux à traiter ou en liaison avec d'autres flux à traiter.
